# EUROPEAN PATENT APPLICATION

(11) **EP 4 787 191 A1**
(43) Date of publication of application: **05.08.2026**
(21) Application number: 26152379.9
(22) Date of filing: 16.01.2026
(51) Int. Cl.: G06F 16/93, G06N 3/045

(54) **AUTOMATED DOCUMENT INTEGRATION**

(30) Priority: 31.01.2025 US 202519042694
(71) Applicant: Intuit Inc., Mountain View, CA 94043 (US)
(72) Inventor: SUBRAHMANIAM, Vignesh Thirukazhukundram, Mountain View, 94043 (US); HO, Nhung, Mountain View, 94043 (US); SRIVASTAVA, Ashok, Mountain View, 94043 (US); KUMAR, Sricharan Kallur Palli, Mountain View, 94043 (US)
(74) Representative: D Young & Co LLP

(57) **Abstract**

Aspects of the present disclosure relate to automated document integration. Embodiments include receiving one or more documents from a user. Embodiments further include extracting, using a computer vision machine learning model, a first data item from the one or more documents. Embodiments further include generating a prompt based on a second data item not being present in the one or more documents, wherein the prompt comprises a request for the user to provide the second data item. Embodiments further include receiving, based on the prompt, an additional document from the user. Embodiments further extracting, using the computer vision machine learning model, the second data item from the additional document. Embodiments further include generating, via a particular machine learning model based on the first data item and the second data item, an electronic document that corresponds to a particular format.

## Description

### INTRODUCTION

Aspects of the present disclosure relate to techniques for automatically integrating documents into existing systems. In particular, techniques described herein involve using machine learning techniques to extract information from documents provided by users, guide the users to provide additional information, and then generate electronic documents based on the information. The electronic documents may be generated in a format that allows for integrating the documents into other systems, such as automated document processing systems.

### BACKGROUND

Every year millions of people, businesses, and organizations around the world perform tasks relating to systems that involve documents. For example, an organization may maintain a database for storing documents, and physical documents may be converted into a digital form and uploaded into the database. As another example, a business may conduct payroll operations that involve physical and/or electronic documents.

Integrating existing documents from one system into another may present many technical and practical challenges. As an illustrative example, an organization that is upgrading from an old document management system to a new document management system may have a vast collection of documents stored in the old system. To transition to the new system, the documents may need to be converted into a format that is compatible with the new system. Manually converting documents from one format to another (e.g., from a physical document to an electronic document with a specific structure) may be impractical. For example, when a large number of documents must be converted into a format that is compatible with an automated system, this may offset the efficiency benefits of using the automated system.

Furthermore, while automated techniques for converting a document from one format to another exist, these existing techniques are not capable of fully automating the document integration process. For example, while existing technologies (e.g., optical character recognition, or OCR, technologies) may be able to extract text from an image of a document, these technologies are not capable of dynamically adapting the structure and format of the extracted text to match a format required to integrate the document into another system. As another example, existing techniques are unable to effectively organize the document integration process. As a result, users must still manually perform tasks such as determining which documents and data items are relevant/important for the system, identifying where information within existing documents should be placed, and/or the like. Such manual integration of documents may be a tedious and complex task that consumes a large amount of resources (e.g., labor resources and computing resources) and offsets many of the benefits of the systems into which the documents are integrated. As a result, if using an automated/electronic document system requires integrating existing documents into the system, many users may forego using the system altogether.

Thus, there is a need in the art for improved techniques of automated document integration.

### BRIEF SUMMARY

Particular embodiments are set out in the independent claims. Various optional examples are set out in the dependent claims. Certain embodiments provide a method of automated document integration. The method generally includes: receiving one or more documents from a user; extracting, using a computer vision machine learning model, a first data item from the one or more documents; generating a prompt based on a second data item not being present in the one or more documents, wherein the prompt comprises a request for the user to provide the second data item; receiving, based on the prompt, an additional document from the user; extracting, using the computer vision machine learning model, the second data item from the additional document; and generating, via a particular machine learning model based on the first data item and the second data item, an electronic document that corresponds to a particular format.

Other embodiments provide a method of automated document integration. The method generally includes: receiving one or more documents from a user; classifying, using a first computer vision machine learning model that is configured to classify documents, each of the one or more documents; identifying, based on the classifying using a second computer vision machine learning model that is configured to identify entities, a given entity that is referenced in a given document; extracting, from the one or more documents based on the classifying using a third computer vision machine learning model that is configured to extract information associated with particular entities, a first item of information associated with the given entity; generating, based on a determination that a second item of information associated with the given entity is not present in the one or more documents, a prompt comprising a request for the user to provide the second item of information; receiving, based on the prompt, an additional document from the user; extracting, using a given computer vision machine learning model, the second item of information from the additional document; and generating, via a generative machine learning model based on the identified given entity, the first item of information, and the second item of information, an electronic document that corresponds to a particular format.

Other embodiments provide processing systems configured to perform the aforementioned methods as well as those described herein; non-transitory, computer-readable media comprising instructions that, when executed by one or more processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example of computing components related to automated document integration.
**FIG. 2** depicts an additional example of computing components related to automated document integration.
**FIG. 3** depicts an example graphical representation of information extracted from documents.
**FIG. 4** depicts example operations related to automated document integration.
**FIG. 5** depicts additional example operations related to automated document integration.
**FIG. 6** depicts an example of a processing system for automated document integration.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for automated document integration.

According to certain embodiments, documents provided by users may be integrated into a document system. Integration of documents may involve generating new versions of the documents that correspond to a target format/structure (e.g., a format that matches the format of a different system than the system from which the documents originate). Integrating the documents may comprise generating versions of the documents that are compatible with an automated system. Integrating the documents may also comprise organizing the documents (and/or the information contained therein) in a way that matches the organization of a target system. By way of example, integrating electronic documents from a first file management system into a second file management system may involve generating entirely new documents based on existing files within the first system. The new documents may be documents that match a style and format of the second system. The new documents may be documents that are compatible with automated processes associated with the second system.

In some embodiments, an agentic artificial intelligence system may be used to integrate the documents. The agentic system may comprise one or more computer vision machine learning models that may be used to extract information from documents provided by a user. As an example, a first computer vision model may be configured to extract a first type of information, a second computer vision model may be configured to extract a second type of information, and so on. The agentic system may generate prompts that instruct the user to provide additional information. For example, the prompt may be generated based on determining that an important/relevant item of information was not found in the documents. The agentic system may thus guide the user to provide information (e.g., by submitting images of documents to the system) until sufficient information has been provided to fully integrate the documents.

According to certain embodiments, confidence scores may be generated with respect to extracted data items and/or data items that are candidates for extraction. For example, an output generated by a computer vision machine learning model may include a confidence score that indicates the likelihood that an extracted data item is the data item targeted by the model. If a confidence score with respect to an extracted data item fails to meet a threshold, a prompt may be generated and provided to the user that asks the user to confirm that the correct data item has been extracted. Alternatively, if confidence scores with respect to the data items that are candidates for extraction fail to meet a threshold, it may be determined that the targeted data item is not present in the documents.

Embodiments of the present disclosure provide numerous technical and practical effects and benefits. For example, techniques described herein allow for automating the integration of documents into existing systems, such as automated electronic document processing systems. As a result, systems that previously required manual conversion and integration of documents may be fully automated, resulting in higher efficiency and usability of these systems. Thus, embodiments of the present disclosure increase the amount of content modalities that are compatible with automated systems.

Furthermore, embodiments disclosed herein improve the reliability of document processing systems. For example, by generating confidence scores for newly extracted data items and data items that are candidates for extraction, embodiments of the present disclosure ensure that data is correctly extracted from the documents and that the documents are successfully integrated into the system. As a result, the functionality of document processing systems may be improved because erroneous extractions may be avoided. Furthermore, by retraining the computer vision machine learning models and other models based on user feedback (e.g., feedback indicating that an extracted data item was not correctly extracted), the functionality of the techniques disclosed herein may be continuously improved.

### Example of Computing Components Related to Automated Document Integration

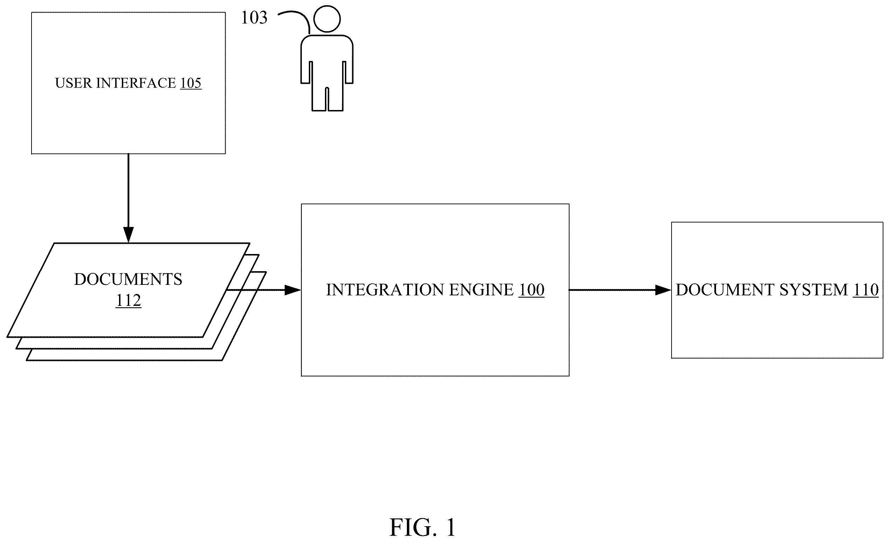

**FIG. 1** depicts an example of computing components related to automated document integration.

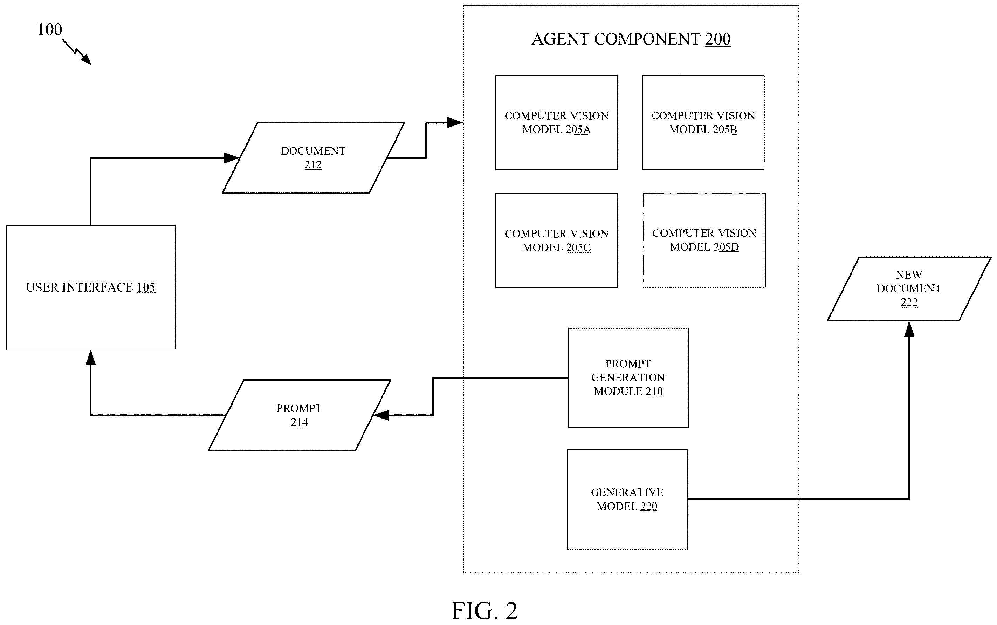

A user 103 may interact with a computing environment via a user interface 105 associated with a computing device. The computing environment may, for example, comprise a software application. The software application may use integration engine 100, described in further detail below with respect to **FIG. 2****,** to integrate documents 112 into a document system 110.

The documents 112 may include any type of document. For example, the documents 112 may be electronic documents that are uploaded via user interface 105. As another example, the documents 112 may be physical documents. An image of the physical documents may be captured and provided to integration engine 100. For example, the image may be captured with a camera associated with the computing device or with a camera associated with integration engine 100.

The document system 110 may be any type of system used to store documents, manage documents, process documents, and/or the like. In some embodiments, the document system 110 may comprise an electronic document processing system, such as a database for storing documents. Integration engine 100 may be used to generate versions of the documents 112 that are compatible with the document system 110. For example, the generated documents may contain the information of the original documents 112 organized in a structure/format that is compatible with the document system 110.

The software application associated with the user interface 105, the integration engine 100, and/or the document system 110 may interact over network 140. Network 140 may be any connection over which data may be transmitted. In one example, network 140 is the Internet.

**FIG. 2** depicts an additional example of computing components related to automated document integration. In particular, **FIG. 2** depicts functionality that may be performed by the integration engine 100 of **FIG. 1****.**

A user may provide one or more documents (e.g., images of physical documents) to agent component 200 via a user interface 105. The user may provide the documents based on a prompt that instructs the user to provide certain documents and/or items of information.

The agent component 200 may comprise one or more machine learning models (e.g., computer vision models 205A-B) or, alternatively, the machine learning models may be separate from agent component 200 and agent component 200 may interact with the machine learning models. The agent component 200 may comprise (or interact with) a prompt generation module 210 and/or a generative model 220.

The agent component 200 may provide a document 212 provided by the user to one or more computer vision machine learning models 205A-D. The computer vision models 205A-D may each be configured to extract certain data items from documents. In some embodiments, the data items extracted by one model may be extracted based on one or more other data items that were previously extracted by one or more other models. For example, computer vision model 205A may be configured to extract a classification for documents (e.g., by generating an output that indicates a classification for a document). Computer vision model 205A may classify a given document as being a list of names. Computer vision model 205B may be configured to extract names from documents (e.g., names of entities such as individuals, organizations, businesses, and/or the like). Based on the classification of the given document as a list of names, the agent component 200 may provide the given document to computer vision model 205B, which may extract one or more names from the given document. Then, agent component 200 may provide one or more of the documents and the extracted names to computer vision model 205C, which may be configured to extract a data item associated with an entity. Computer vision model 205C may then extract a data item associated with an extracted name (e.g., a field of a form associated with an individual whose name was extracted by computer vision model 205B). The configuration of computer vision models 205 shown in **FIG. 2** is included as an illustrative example, and more or fewer computer vision models may be used.

The computer vision models 205 may comprise machine learning models such as masked recurrent convolutional neural networks (MaskRCNN) that are trained to identify and/or classify regions of interest in a document in which relevant items are located. Based on an input that includes one or more documents, the models may generate an output that comprises an identification of regions within the document that contain relevant items, a classification of the identified items, the items themselves (e.g., text within the identified region may be extracted and included in the output), a classification of the document, and/or the like.

In some embodiments, the output of the computer vision models 205 may further comprise a confidence score with respect to the classification/extraction/identification. For example, if computer vision model 205A is configured to extract names from documents, a confidence score generated by computer vision model 205A may indicate the likelihood that an identified region contains a name. If the confidence score fails to meet a certain threshold, the user may be asked to verify that the data item has been correctly identified. If no data item within the documents meets a different threshold (e.g., an even lower threshold), it may be determined that the documents do not contain the item.

Agent component 200 may be configured to orchestrate between the computer vision models 205A-D, the prompt generation module 210, and the generative model 220 to integrate documents. For example, a particular type of information may be required for integrating documents into a new system. If this item of information is not present in any of the documents provided by the user, a computer vision model 205 configured to extract this type of information may be unable to extract the information. Based on the required item not being extracted, the agent component 200 may be configured to invoke prompt generation module 210 to generate a prompt 214 that requests the required item of information from the user. Based on the prompt 214, the user may submit an additional document that contains the required item of information. The agent component 200 may route the additional document to a computer vision model that extracts the required item of information. The required item of information (and/or other extracted data items) may be provided as part of an input to generative model 220, which may generate a new document 222 based on the extracted data items. The agent component 200 may use rule-based and/or machine learning-based techniques for determining which items should be provided by the user. For example, agent component 200 may comprise a machine learning model that is trained to identify which items are necessary for integrating documents into a system.

Prompt generation module 210 may be used to generate prompts 214 to provide to the user. In some embodiments, the prompts 214 are generated by populating prompt templates based on items of information to be provided by the user. For example, if the user is attempting to integrate an individual's records into a record processing system, the generated prompt may request forms that were submitted by the individual in the past year. In some embodiments, a generative machine learning model such as generative model 220 is used to generate the prompt.

The generative machine learning model 220 may be any type of generative machine learning model, such as a large language model (LLM). The generative machine learning model may be trained to generate new documents 222 based on extracted data items. The new documents 222 may be documents that are compatible with a document system (e.g., an automated document processing system). The generative model 220 may also be trained to generate prompts 214 to provide to users, as discussed above.

One or more machine learning models, such as computer vision models 205A-D and/or generative model 220, may be trained based on supervised, unsupervised, reinforcement, or semi-supervised learning techniques. Supervised learning techniques generally involve providing training inputs to a machine learning model. The machine learning model processes the training inputs and outputs predictions based on the training inputs. The predictions are compared to known labels associated with the training inputs to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Model parameters adjusted during training may include, for example, hyperparameters, values related to numbers of iterations, weights, functions used by nodes to calculate scores, level of randomness, and/or the like. In some embodiments, validation and testing are also performed for a machine learning model, such as based on validation data and test data, as is known in the art. It is noted that "training" as used herein may refer to initial training, re-training, and/or fine tuning of a machine learning model, such as such as computer vision models 205A-D and/or generative model 220.

A supervised learning process for a computer vision model 205 may comprise providing a training input to the computer vision model 205. The training data may include an input that may comprise an image of a document. The training data may further comprise a ground truth label indicating a region within the image that contains a target data item and/or a classification. The training input may be provided to the computer vision model 205, and the computer vision model 205 may be used to generate an output that indicates a region that contains the target data item and/or a classification. Parameters of the computer vision model 205 may be iteratively adjusted based on a variance between the ground truth output and the output generated by the computer vision model 205 (e.g., until the output of the computer vision model 205 matches the ground truth output). Generative model 220 may be trained through a similar process, where documents and/or prompts generated by the model are compared to a ground truth document/prompt, and parameters of the model are adjusted based on a variance between the output and the ground truth. In certain embodiments, the variance is determined using a semantic similarity comparison involving embedding representations of entities such as an output and a ground truth output. An embedding generally refers to a vector representation of an entity that represents the entity as a vector in n-dimensional space such that similar entities are represented by vectors that are close to one another in the n-dimensional space.

Certain embodiments provide that the computer vision models 205A-D and/or generative model 220 may be retrained based on user feedback. For example, a user may provide feedback indicating that a data item was incorrectly extracted (e.g., when prompted to confirm that the extraction was correct) and/or a new document 222 contains errors. Based on this feedback, labeled training data may be generated (e.g., automatically) and used to retrain one or more of the computer vision models 205A-D and/or generative model 220. For example, if the feedback includes an identification of a region within an image that contains the target data item, the identified region may be labeled as the ground truth, and a computer vision model 205 may be retrained using the newly-generated training data.

Computer vision models 205A-D may be, for example, convolution neural networks, transformer models, other types of neural networks, or other suitable types of machine learning models capable of extracting certain types of data from documents.

### Example Graphical Representation of Information Extracted from Documents

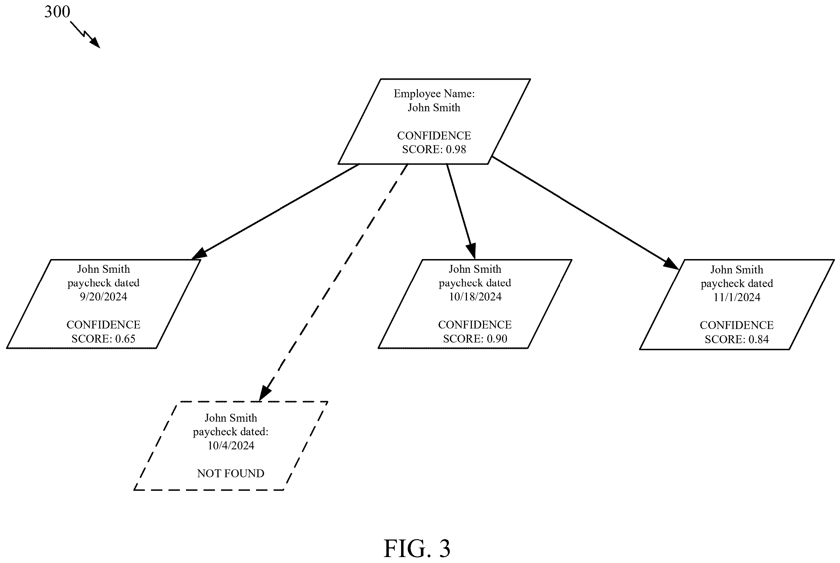

**FIG. 3** depicts an example of a graphical representation 300 of information extracted from documents.

The graphical representation 300 shown in **FIG. 3** depicts data items extracted from documents according to certain embodiments disclosed herein. As shown in this illustrative example, the data items are extracted from payroll documents. The data items may be used to integrate the payroll documents into another payroll system.

One of the data items extracted from the documents is the employee name "John Smith." This name may have been extracted from a document that includes a list of employees of a company. The document may have been provided along with other documents and classified as a list of employees (e.g., using a computer vision model configured to classify documents). The document may have been provided based on a prompt requesting a list of employees to be added to the payroll system.

The name may have been extracted by a computer vision model that was configured to extract names. As shown in **FIG. 3****,** the computer vision model that extracted the employee name also output a high confidence score for the extracted name. This high confidence score indicates that the extracted data item likely includes a name. Based on this high level of confidence, a user may not be prompted to confirm that "John Smith" is an employee name.

The user may be prompted to provide pay stubs for each identified employee, and a computer vision model may be used to identify and extract the pay stubs. As shown in **FIG. 3****,** pay stubs for John Smith have been identified for September 20^{th}, October 18^{th}, and November 1^{st}. The October 18^{th} and November 1^{st} pay stubs have confidence scores of 0.90 and 0.84, respectively. These relatively high confidence scores indicate that the extracted data items likely correspond to John Smith pay stubs for the respective dates. The September 20^{th} pay stub has a confidence score of 0.65. This indicates that the extracted data item may be John Smith's pay stub for September 20^{th}. Based on this relatively low confidence score, the user may be prompted to confirm that the data item is John Smith's pay stub for September 20^{th}. As an example, a confidence score of 0.70 may have been the threshold for asking for confirmation - since the score is below the 0.70 threshold, a prompt asking for confirmation may be generated and provided to the user.

As shown in **FIG. 3****,** a pay stub for John Smith for October 4^{th} has not been identified. This may be, for example, because no data item in any of the provided documents met a confidence score threshold for extraction. For instance, the confidence score threshold for extraction may be 0.50. Because no data item in the documents meets the extraction threshold, it was determined that the October 4^{th} pay stub was not in the provided documents. Based on this determination, a prompt may be generated asking the user to provide the October 4^{th} pay stub.

### Example Operations Related to Automated Document Integration

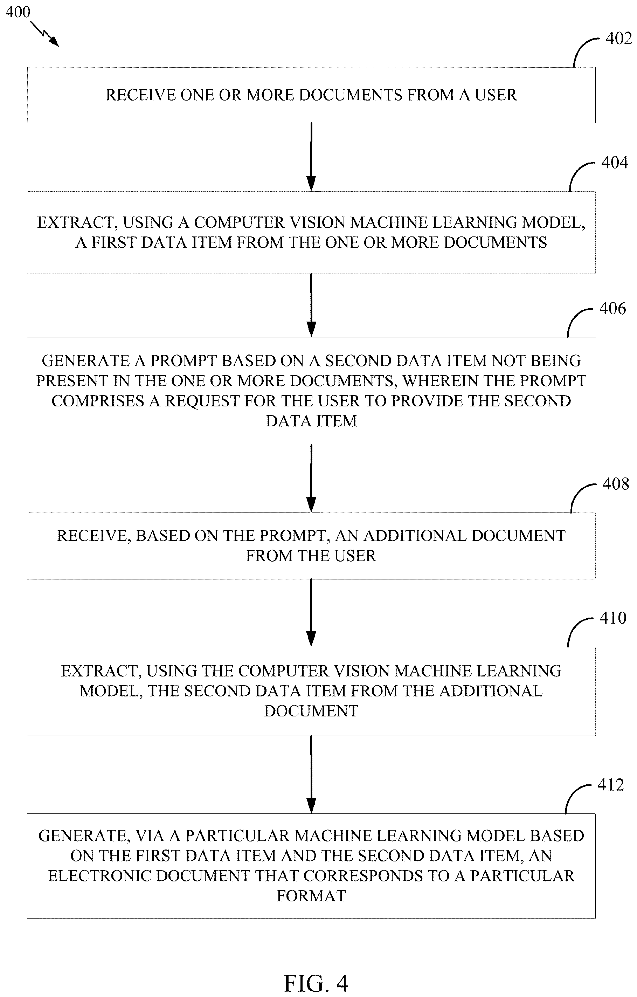

**FIG. 4** depicts example operations 400 related to automated document integration. For example, operations 400 may be performed by one or more of the components described with respect to **FIG. 1** and **FIG. 2****.**

Operations 400 begin at step 402 with receiving one or more documents from a user.

Operations 400 continue at step 404 with extracting, using a computer vision machine learning model, a first data item from the one or more documents. In certain embodiments, the computer vision machine learning model is further configured to generate a respective confidence score with respect to each data item in the one or more documents. Some embodiments provide that the prompt is generated based on each respective confidence score failing to meet a particular threshold. According to certain embodiments, the user is prompted to confirm that the second data item has been correctly extracted based on a confidence score for the extracted second data item failing to meet a given threshold. Some embodiments provide that the first data item comprises a classification for a given document of the one or more documents.

Operations 400 continue at step 406 with generating a prompt based on a second data item not being present in the one or more documents, wherein the prompt comprises a request for the user to provide the second data item. According to some embodiments, the prompt is generated by a given machine learning model. In certain embodiments, the prompt is generated based on the respective confidence score generated with respect to the second data item failing to meet a particular threshold.

Operations 400 continue at step 408 with receiving, based on the prompt, an additional document from the user.

Operations 400 continue at step 410 with extracting, using the computer vision machine learning model, the second data item from the additional document. Certain embodiments provide that the computer vision machine learning model is retrained based on feedback received from the user based on an electronic document generated based on the extracted data items.

Operations 400 continue at step 412 with generating, via a particular machine learning model based on the first data item and the second data item, an electronic document that corresponds to a particular format. In some embodiments, the particular machine learning model is retrained based on feedback received from the user based on the electronic document.

Some embodiments provide that an additional computer vision machine learning model that is configured to extract an additional type of information is used to extract a third data item, and generating the electronic document is further based on the third data item.

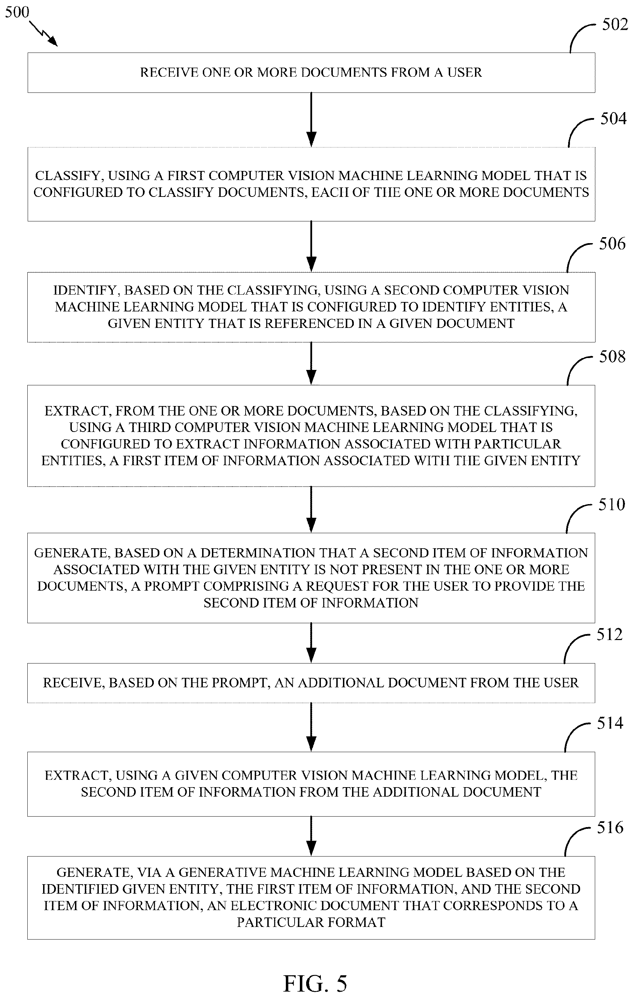

**FIG. 5** depicts additional example operations 500 related to automated document integration. For example, operations 500 may be performed by one or more of the components described with respect to **FIG. 1** and **FIG. 2****.**

Operations 500 begin at step 502 with receiving one or more documents from a user.

Operations 500 continue at step 504 with classifying, using a first computer vision machine learning model that is configured to classify documents, each of the one or more documents.

Operations 500 continue at step 506 with identifying, based on the classifying, using a second computer vision machine learning model that is configured to identify entities, a given entity that is referenced in a given document.

Operations 500 continue at step 508 with extracting, from the one or more documents, based on the classifying, using a third computer vision machine learning model that is configured to extract information associated with particular entities, a first item of information associated with the given entity. In certain embodiments, the third computer vision machine learning model is configured to generate a respective confidence score with respect to each data item in a given document. According to certain embodiments, one or more computer vision machine learning models are retrained based on feedback received from the user based on an electronic document generated based on the extracted data items.

Operations 500 continue at step 510 with generating, based on a determination that a second item of information associated with the given entity is not present in the one or more documents, a prompt comprising a request for the user to provide the second item of information. Some embodiments provide that the prompt is generated based on the respective confidence score generated with respect to the second item of data failing to meet a particular threshold. According to some embodiments, the user is prompted to confirm that the second data item has been correctly extracted based on a confidence score for the extracted second data item failing to meet a given threshold.

Operations 500 continue at step 512 with receiving, based on the prompt, an additional document from the user.

Operations 500 continue at step 514 with extracting, using a given computer vision machine learning model, the second item of information from the additional document.

Operations 500 continue at step 516 with generating, via a generative machine learning model based on the identified given entity, the first item of information, and the second item of information, an electronic document that corresponds to a particular format. In certain embodiments, the generative machine learning model is retrained based on feedback received from the user based on the electronic document.

### Example of a Processing System for Automated Document Integration

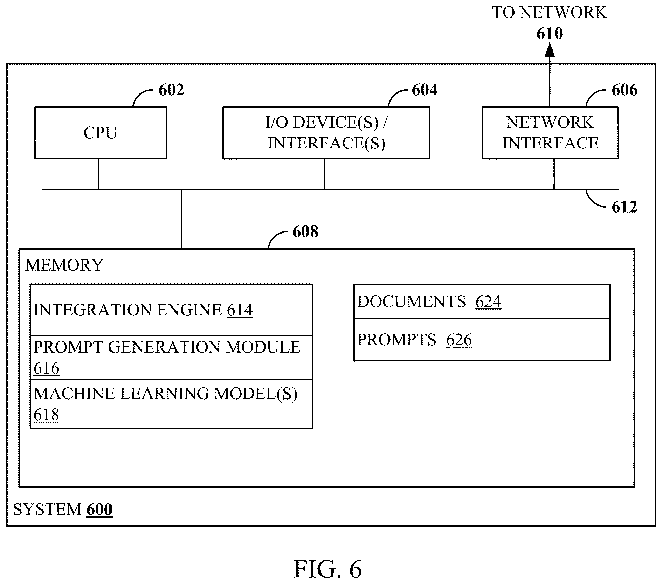

**FIG. 6** illustrates an example system 600 with which embodiments of the present disclosure may be implemented. For example, system 600 may be configured to perform operations 400 of **FIG. 4** or operations 500 of **FIG. 5** and/or to implement one or more components as in **FIG. 1** or **FIG. 2****.**

System 600 includes a central processing unit (CPU) 602, one or more I/O device interfaces that may allow for the connection of various I/O devices 604 (e.g., keyboards, displays, mouse devices, pen input, etc.) to the system 600, network interface 606, a memory 608, and an interconnect 612. It is contemplated that one or more components of system 600 may be located remotely and accessed via a network 610. It is further contemplated that one or more components of system 600 may comprise physical components or virtualized components.

CPU 602 may retrieve and execute programming instructions stored in the memory 608. Similarly, the CPU 602 may retrieve and store application data residing in the memory 608. The interconnect 612 transmits programming instructions and application data, among the CPU 602, I/O device interface 604, network interface 606, and memory 608. CPU 602 is included to be representative of a single CPU, multiple CPUs, a single CPU having multiple processing cores, and other arrangements.

Additionally, the memory 608 is included to be representative of a random access memory or the like. In some embodiments, memory 608 may comprise a disk drive, solid state drive, or a collection of storage devices distributed across multiple storage systems. Although shown as a single unit, the memory 608 may be a combination of fixed and/or removable storage devices, such as fixed disc drives, removable memory cards or optical storage, network attached storage (NAS), or a storage area-network (SAN).

As shown, memory 608 includes application 614, prompt generation module 616, and machine learning model(s) 618. Application 614 may be representative of a software application associated with user interface 105 of **FIG.1** and **FIG.** 2. In some embodiments, prompt generation module 616 may be representative of prompt generation module 210 of **FIG. 2****.** Machine learning model(s) 618 may be representative of generative model 220 of **FIG. 2** or computer vision models 205A-D of **FIG. 2****.**

Memory 608 further comprises documents 624, which may correspond to documents 112 of **FIG. 1****,** document 212 of **FIG. 2****,** or new document 222 of **FIG. 2****.** Memory 608 further comprises prompts 626, which may correspond to prompt 214 of **FIG. 2****.**

It is noted that in some embodiments, system 600 may interact with one or more external components, such as via network 610, in order to retrieve data and/or perform operations.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Thus, from one perspective, there has now been described automated document integration. Embodiments include receiving one or more documents from a user. Embodiments further include extracting, using a computer vision machine learning model, a first data item from the one or more documents. Embodiments further include generating a prompt based on a second data item not being present in the one or more documents, wherein the prompt comprises a request for the user to provide the second data item. Embodiments further include receiving, based on the prompt, an additional document from the user. Embodiments further extracting, using the computer vision machine learning model, the second data item from the additional document. Embodiments further include generating, via a particular machine learning model based on the first data item and the second data item, an electronic document that corresponds to a particular format.

Further examples of feature combinations taught by the present disclosure are set out in the following numbered clauses:
1. A method of automated document integration, comprising:
   receiving one or more documents from a user;
   extracting, using a computer vision machine learning model, a first data item from the one or more documents;
   generating a prompt based on a second data item not being present in the one or more documents, wherein the prompt comprises a request for the user to provide the second data item;
   receiving, based on the prompt, an additional document from the user;
   extracting, using the computer vision machine learning model, the second data item from the additional document; and
   generating, via a particular machine learning model based on the first data item and the second data item, an electronic document that corresponds to a particular format.
2. The method of clause 1, wherein the computer vision machine learning model is further configured to generate a respective confidence score with respect to each data item in the one or more documents.
3. The method of clause 1 or 2, wherein the prompt is generated based on the respective confidence score generated with respect to the second data item failing to meet a particular threshold.
4. The method of clause 2, wherein the user is prompted to confirm that the second data item has been correctly extracted based on a confidence score for the extracted second data item failing to meet a given threshold.
5. The method of any preceding clause, further comprising using an additional computer vision machine learning model that is configured to extract an additional type of information to extract a third data item, wherein generating the electronic document is further based on the third data item.
6. The method of clause 1, further comprising retraining the computer vision machine learning model based on feedback received from the user based on the electronic document.
7. The method of any preceding clause, further comprising retraining the particular machine learning model based on feedback received from the user based on the electronic document.
8. The method of any preceding clause, wherein the first data item comprises a classification for a given document of the one or more documents.
9. The method of any preceding clause, wherein the prompt is generated by a given machine learning model.
10. A method of automated document integration, comprising:
   receiving one or more documents from a user;
   classifying, using a first computer vision machine learning model that is configured to classify documents, each of the one or more documents;
   identifying, based on the classifying, using a second computer vision machine learning model that is configured to identify entities, a given entity that is referenced in a given document;
   extracting, from the one or more documents, based on the classifying, using a third computer vision machine learning model that is configured to extract information associated with particular entities, a first item of information associated with the given entity;
   generating, based on a determination that a second item of information associated with the given entity is not present in the one or more documents, a prompt comprising a request for the user to provide the second item of information;
   receiving, based on the prompt, an additional document from the user;
   extracting, using a given computer vision machine learning model, the second item of information from the additional document; and
   generating, via a generative machine learning model based on the identified given entity, the first item of information, and the second item of information, an electronic document that corresponds to a particular format.
11. The method of clause 10, wherein the third computer vision machine learning model is configured to generate a respective confidence score with respect to each data item in a given document.
12. The method of clause 11, wherein the prompt is generated based on the respective confidence score generated with respect to the second item of data failing to meet a particular threshold.
13. The method of clause 11 or 12, wherein the user is prompted to confirm that the second item of information has been correctly extracted based on a confidence score for the extracted second item of information failing to meet a given threshold.
14. The method of any of clause 11 to 13, further comprising retraining one or more of the first computer vision machine learning model or the second computer vision machine learning model based on feedback received from the user based on the electronic document.
15. The method of any of clause 11 to 14, further comprising retraining the generative machine learning model based on feedback received from the user based on the electronic document.
16. A system for automated document integration, comprising:
   one or more processors; and
   a memory comprising instructions that, when executed by the one or more processors, cause the system to:
      receive one or more documents from a user;
      extract, using a computer vision machine learning model, a first data item from the one or more documents;
      generate a prompt based on a second data item not being present in the one or more documents, wherein the prompt comprises a request for the user to provide the second data item;
      receive, based on the prompt, an additional document from the user;
      extract, using the computer vision machine learning model, the second data item from the additional document; and
      generate, via a particular machine learning model based on the first data item and the second data item, an electronic document that corresponds to a particular format.
17. The system of clause 16, wherein the computer vision machine learning model is configured to generate a respective confidence score with respect to each data item in the one or more documents.
18. The system of clause 16 or 17, wherein the prompt is generated based on the respective confidence score generated with respect to the second data item failing to meet a particular threshold.
19. The system of any of clause 16 to 18, wherein the instructions further cause the system to retrain the computer vision machine learning model based on feedback received from the user based on the electronic document.
20. The system of any of clause 16 to 19, wherein the instructions further cause the system to retrain the particular machine learning model based on feedback received from the user based on the electronic document.

## Claims

1. A method of automated document integration, comprising:
receiving one or more documents from a user;
extracting, using a computer vision machine learning model, a first data item from the one or more documents;
generating a prompt based on a second data item not being present in the one or more documents, wherein the prompt comprises a request for the user to provide the second data item;
receiving, based on the prompt, an additional document from the user;
extracting, using the computer vision machine learning model, the second data item from the additional document; and
generating, via a particular machine learning model based on the first data item and the second data item, an electronic document that corresponds to a particular format.

2. The method of claim 1, wherein the computer vision machine learning model is further configured to generate a respective confidence score with respect to each data item in the one or more documents.

3. The method of claim 1 or 2, wherein the prompt is generated based on the respective confidence score generated with respect to the second data item failing to meet a particular threshold.

4. The method of claim 2, wherein the user is prompted to confirm that the second data item has been correctly extracted based on a confidence score for the extracted second data item failing to meet a given threshold.

5. The method of any preceding claim, further comprising using an additional computer vision machine learning model that is configured to extract an additional type of information to extract a third data item, wherein generating the electronic document is further based on the third data item.

6. The method of claim 1, further comprising retraining the computer vision machine learning model based on feedback received from the user based on the electronic document.

7. The method of any preceding claim, further comprising retraining the particular machine learning model based on feedback received from the user based on the electronic document.

8. The method of any preceding claim, wherein the first data item comprises a classification for a given document of the one or more documents.

9. The method of any preceding claim, wherein the prompt is generated by a given machine learning model.

10. A method of automated document integration, comprising:
receiving one or more documents from a user;
classifying, using a first computer vision machine learning model that is configured to classify documents, each of the one or more documents;
identifying, based on the classifying, using a second computer vision machine learning model that is configured to identify entities, a given entity that is referenced in a given document;
extracting, from the one or more documents, based on the classifying, using a third computer vision machine learning model that is configured to extract information associated with particular entities, a first item of information associated with the given entity;
generating, based on a determination that a second item of information associated with the given entity is not present in the one or more documents, a prompt comprising a request for the user to provide the second item of information;
receiving, based on the prompt, an additional document from the user;
extracting, using a given computer vision machine learning model, the second item of information from the additional document; and
generating, via a generative machine learning model based on the identified given entity, the first item of information, and the second item of information, an electronic document that corresponds to a particular format.

11. The method of claim 10, wherein the third computer vision machine learning model is configured to generate a respective confidence score with respect to each data item in a given document.

12. The method of claim 11, wherein the prompt is generated based on the respective confidence score generated with respect to the second item of data failing to meet a particular threshold.

13. The method of claim 11 or 12, wherein the user is prompted to confirm that the second item of information has been correctly extracted based on a confidence score for the extracted second item of information failing to meet a given threshold.

14. The method of any of claims 11 to 13, further comprising retraining one or more of the first computer vision machine learning model or the second computer vision machine learning model based on feedback received from the user based on the electronic document.

15. A system for automated document integration, comprising:
one or more processors; and
a memory comprising instructions that, when executed by the one or more processors, cause the system to:
receive one or more documents from a user;
extract, using a computer vision machine learning model, a first data item from the one or more documents;
generate a prompt based on a second data item not being present in the one or more documents, wherein the prompt comprises a request for the user to provide the second data item;
receive, based on the prompt, an additional document from the user;
extract, using the computer vision machine learning model, the second data item from the additional document; and
generate, via a particular machine learning model based on the first data item and the second data item, an electronic document that corresponds to a particular format.
